# EUROPEAN PATENT SPECIFICATION

(11) **EP 0 404 951 B1**
(45) Date of publication and mention of the grant of the patent: **24.04.1996**
(21) Application number: 89907834.9
(22) Date of filing: 28.06.1989
(51) Int. Cl.: G11B 7/24, G11B 7/26

(54) **OPTICAL RECORDING MEDIUM AND A METHOD OF PRODUCING THE SAME**
OPTISCHES SPEICHERMEDIUM UND VERFAHREN ZU SEINER HERSTELLUNG
SUPPORT D'ENREGISTREMENT OPTIQUE ET PROCEDE DE PRODUCTION DE CE SUPPORT

(30) Priority: 01.07.1988 JP 164161/88; 01.07.1988 JP 164163/88
(43) Date of publication of application: 02.01.1991
(73) Proprietor: SONY CORPORATION, Tokyo 141 (JP)
(72) Inventor: AKAMATSU, Junichi,Sony Corporation, Tokyo 141 (JP); YAMAMURA, Masato,Sony Corporation, Tokyo 141 (JP)
(74) Representative: TER MEER - MÜLLER - STEINMEISTER & PARTNER
(86) International application number: JP8900647
(87) International publication number: WO9000299

(56) References cited:
- EP-A- 0 265 641
- EP-A- 0 268 482
- FR-A- 2 365 854
- JP-A- 5 538 655
- JP-A- 6 310 350
- JP-A-51 135 649
- PATENT ABSTRACTS OF JAPAN vol. 7, no. 26 (P-172)(1171) 2 February 1983 & JP-A-57 181 443
- PATENT ABSTRACTS OF JAPAN vol. 8, no. 45 (P-257)(1482) 28 February 1984 & JP-A-58 196 636
- PATENT ABSTRACTS OF JAPAN vol. 10, no. 225 (P-484)(2281) 6 August 1986 & JP-A-61 059 641
- PATENT ABSTRACTS OF JAPAN vol. 010, no. 348 (P-519)22 November 1986 & JP-A-61 148 645
- PATENT ABSTRACTS OF JAPAN vol. 10, no. 152 (P-462)(2208) 3 June 1986 & JP-A-61 005 451

## Description

### Field of the Invention

This invention relates to an optical recording medium and the method for producing the same, and may be applied to an optical card and an optical disk wherein a recording layer on which optically readable data are recorded is formed on a substrate or base material.

### Background of Art

An optical card, used as various data memory cards, such as cash cards, credit cards or identification certificate cards, is of such a construction that a recording layer on which are recorded optically readable data is formed with the interposition of a protective layer and a protective layer is laminated on the recording layer with the interposition of a protective layer. On the surface of the protection film, there are printed an information on the method of using the cards or decorative patterns.

The principle of recording and reproducing data in the optical card is to distinguish the difference in the transmittivity or reflectivity of the recording layer and to convert the difference into electrical signals. As the recording layer, thin films of metal or alloy or thin films of organic materials, such as dyestuffs, capable of optically recording or reproducing data, are employed. The recording layer need be formed as an optically homogeneous medium. In general, the recording layer formed by a thin film of metals or alloys is formed on a base material by vacuum film forming techniques, such as evaporation or sputtering, whereas the recording layer formed by a thin film of the organic material is formed by coating the organic dyestuff on the base material by a spin coater or a roll coater.

The above mentioned protective layer for mechanical protection of the recording layer and maintenance of environmental properties, such as resistance to high temperature, high humidity or chemical pollution, is generally formed of an UV curing resin.

The UV curing resin, now used extensively, is superior in general properties as a protective layer, however, it has higher Young modulus (modulus of elasticity) such that it is deformed markedly against mechanical stresses such as compression, tension or bending and unable to assure sufficient protection of the recording layer.

In general, the UV curing resin has a high crosslinking density and a higher thermal conductivity, thermal properties, which are not desirable with respect to the recording properties, above all, the recording sensitivity. That is, when recording with a semiconductor laser element, for example, for forming a predetermined recording pit, the laser power may fall short depending on the type of the protective layer. Above all, in optical recording, with an optical card in need of a larger pit and low speed recording conditions, it is critical to elevate the recording sensitivity, such that a demand is raised for the resin of the protective layer having these thermal properties.

On the other hand, for producing the above mentioned optical card, necessary data are printed in advance on a roll-shaped protective film, such as by silk screen printing or offset printing, the printed protective film is laminated on a recording layer provided on the base material, and the optical card is punched from the laminated base material to a desired shape.

With the conventional method, in which the protective film having the necessary data printed thereon is laminated on the recording layer formed on the base material and the optical card is punched from it to a desired shape, it is necessary to realize high precision positioning of the protective film with the base material having the recording layer formed thereon. For example, it is necessary to provide positioning markers in the base material and the protective film and to perform a positioning operation on the basis of these markers. When various data are provided by multi-color printing on the protective film, a number of printing steps equal to the number of colors is necessitated, and the roll of the protective film need to be rewound and set on a printer for each printing step, while a high precision is required for positioning in the printing process. For printing on the protective film by the silk printing or offset printing methods, a professional grade of a printing equipment is necessitated. Since a high precision is necessitated in positioning with the conventional manufacture method, the yield of production of optical cards is low and production cost is elevated, so that the conventional method is not suited to the multiple species small quantity production of optical cards.

On the other hand, an optical card is usually formed in a rectangular shape and, if such card is prepared one by one using a rectangular base material, it is difficult to form an optically homogeneous recording layer by vacuum film forming or spin coating during the production process, such that it is difficult with the conventional manufacture method to stably produce high quality products. Above all, in case of spin coating, paints proceed to the reverse sides at the corners ot the rectangular base material to lower the production yield of the rectangular base material to raise the production costs.

EP-A-0 268 482 discloses an optical recording medium comprising a substrate, a recording layer and a protective layer, wherein an ultra-hard film containing a carbon atom is provided at least on the side of said optical recording medium on which a laser beam for writing-reproducing is irradiated. EP-A-0 265 641 relates to an optical data storage system, wherein it is stated that, in some cases workers have suggested relatively "hard" materials as a protective transparent overcoat, while in others they have proposed "softer" materials. JP-A-63-10-350 relates to the production of an optical card by bonding a protection layer and a base film together so that an optical information patten layer on the protection layer overlaps an optical reflecting film on the base film, and then bonding the protection layer and a card base material together in a state where both, the light reflecting film and the base film are held between the protection layer and the card base material.

It is therefore an object of the present invention to provide an optical recording medium, such as an optical card or an optical disk, which is improved in recording sensitivity or reliability. It is also an object of the present invention to enable a high quality optical recording medium to be produced stably so that the production yield is elevated to lower the production cost and the multiple species small quantity production is facilitated.

### DISCLOSURE OF THE INVENTION

Accordingly the present invention provides an optical recording medium having a light transmissive base material, a recording layer which is provided on said material and which may be optically read out and a protective layer provided on said recording layer, which is characterized in that said protective layer is formed of a material having a Young modulus of not higher than 2 x 10³ N/mm (2 x 10¹⁰ dyn/cm) and having a lower thermal conductivity than the base material such, that said base material together with said recording layer and said protective layer is capable of being divided or cut into desired shapes.

In a prefered embodiment, the base material is a base plate.

The protective layer formed by the material of a lower Young modulus can sufficiently protect the recording layer without imparting excessive deformation to the recording layer against mechanical stresses such as compression, tension or bending.

The material of the low Young modulus forming the protective layer is preferably an UV curing resin having a Young modulus of not more than 2 x 10³ N/mm (2 x 10¹⁰ dyn/cm).

The present invention also provides a method for producing an optical recording medium comprising a first step of forming a recording layer on a base material, and a second step of forming a protective layer made of a material having a Young modulus of not more than 2 x 10³ N/mm (2 x 10¹⁰ dyn/cm), and that said protective layer has a lower thermal conductivity than said base material by roll coating on the recording layer formed in said first step, which is characterized by a third step of dividing or cutting the base material on which the recording layer has been formed by said first and second steps, into predetermined shapes.

In a prefered embodiment, the process includes a pre-processing step for pre-processing the base material prior to said first step, said pre-processing step comprises the step of forming a hard coating layer on said base material and the step of forming a protective layer by a roll coater on the produced hard coating layer.

The recording layer thus formed of a material having a lower thermal conductivity does not lower the recording sensitivity of the recording layer.

The protective layer having the low Young modulus and the low thermal conductivity may be formed of polyurethane or rubber type UV curing resins.

According to the present invention, by forming the protective layer from a low Young modulus and low thermal conductivity material, an optical recording medium is provided, such as an optical card or disk, which is improved in recording sensitivity and reliability.

The above mentioned first step preferably comprises a sub-step of forming a high reflectivity layer, a sub-step of forming a resist layer on the high reflectivity layer formed by the last mentioned sub-step, a sub-step of subjecting the high resist layer formed by the last mentioned sub-step to mask exposure and a sub-step of etching the high reflectivity layer subjected to mask exposure in the last mentioned sub-step.

The recording layer may be formed as a homogeneous thin film of an organic material by roll coating on the above mentioned rectangular base material. The recording layer may be formed by vacuum film forming, such as by evaporation or sputtering of a metal or alloy, capable of optically recording the data or information. The protective layer may be formed by roll coating on the recording layer efficiently to a uniform thickness.

With the method of producing the recording medium of the present invention, the recording layer and the protective layer are formed on the rectangular base material which is than divided by cutting into a predetermined shape to produce the optical recording media with high production efficiency.

The method for producing the optical recording medium according to the present invention preferably includes a pre-processing step of pre-processing the base material in advance of the first step.

The protective film may be subjected in advance to printing.

The method for producing the optical recording medium according to the present invention accordingly may comprise the step of printing on said protective film cut by said third step.

Printing may be made on the protective film of the base material cut by the third step.

According to the method for producing the optical recording medium of the present invention, the base material on which the protective film is laminated is cut to a predetermined shape, after which printing may be made by pad printing on the protective layer of each recording medium, so that high positioning precision is not necessitated in laminating the protective film and the production yield of the optical recording medium is elevated while its production costs are lowered. In addition, since the necessary data may be printed on the protective film for each recording medium, thus enabling multiple species small quantity production of optical cards.

### BRIEF DESCRIPTION OF THE DRAWINGS

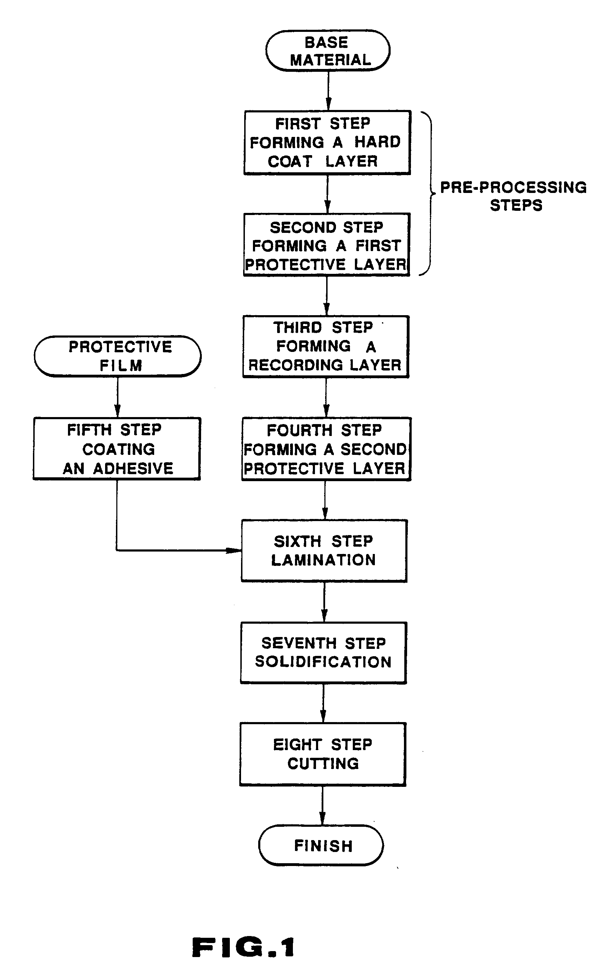

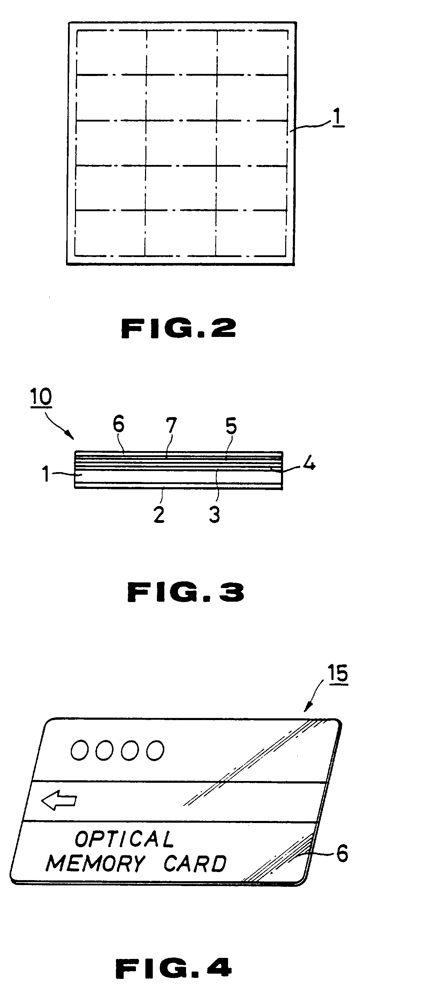

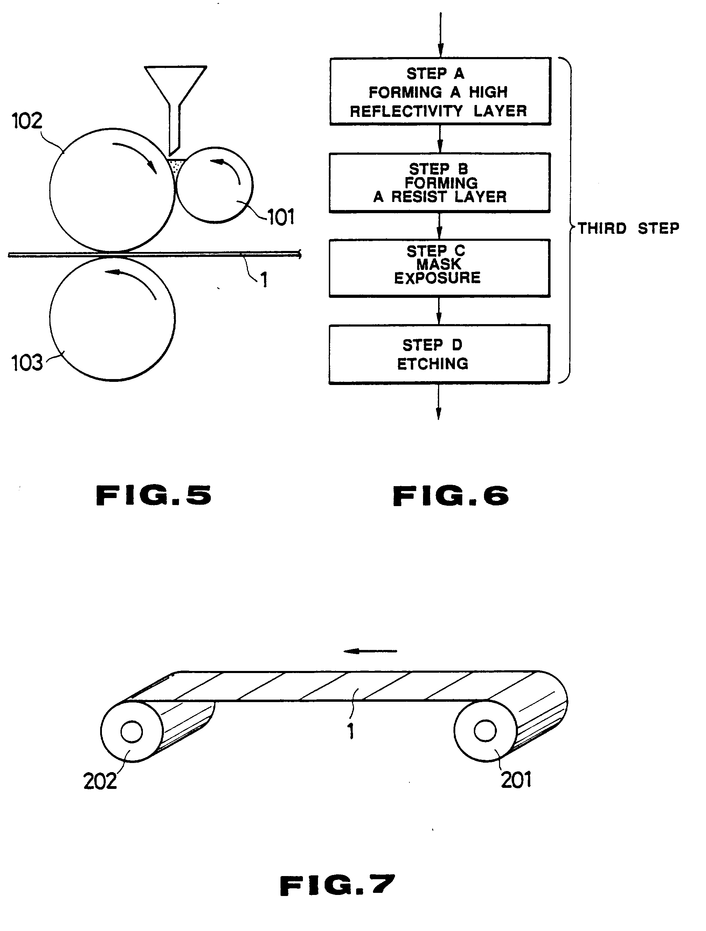

Fig. 1 is a flow chart showing an embodiment of the method according to the present invention; Fig. 2 is a plan view of a base plate employed in the above embodiment; Fig. 3 is a cross-sectional view showing a card base plate formed in the above embodiment; Fig. 4 is a perspective view showing the appearance of an optical card formed in the above embodiment; Fig. 5 is a diagrammatic view showing the fundamental structure of a roll coater employed in practicing the method of the present invention; Fig. 6 is a flow chart showing the manufacture process of the recording layer when modifying the above embodiment to the method for producing the ROM type optical card; Fig. 7 is an explanatory view of the case of producing an optical card continuously according to a film carrier system.

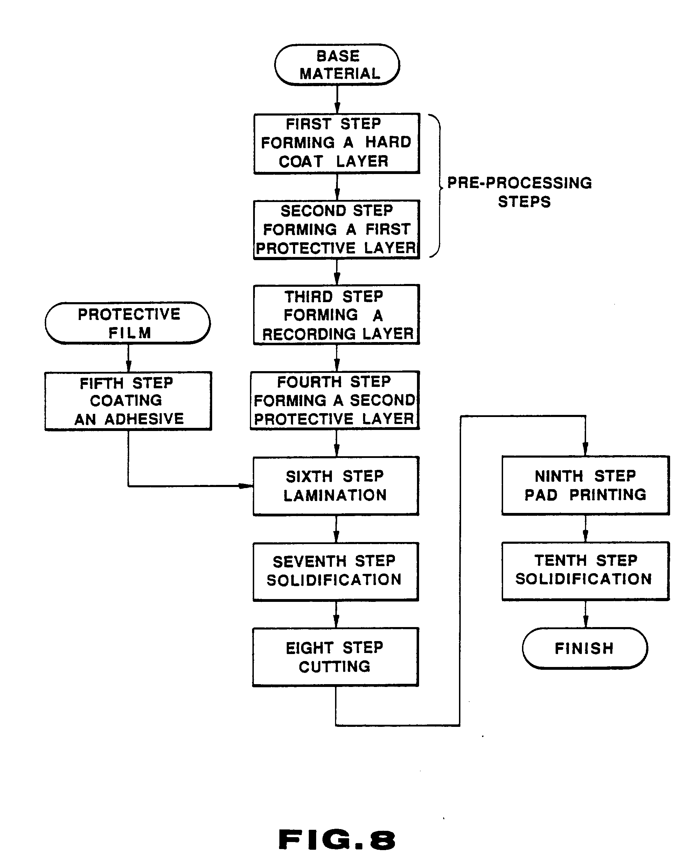

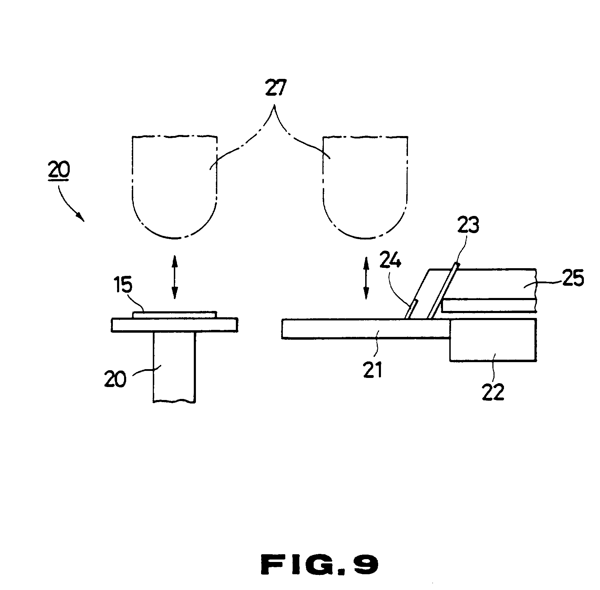

Fig. 8 is a flow chart showing another embodiment of the method of the present invention; and Fig. 9 is a diagrammatic view showing the fundamental structure of a pad printer employed in the above embodiment.

### BEST EMBODIMENT FOR PRACTICING THE INVENTION

By referring to the drawings, certain preferred embodiments of the present invention will be explained in detail.

A polycarbonate plate 260 x 272 mm in size and 0.7 mm in thickness, as shown in Fig. 2, was prepared as a rectangular base plate 1, and a card base material 10 having a cross-sectional shape as shown in Fig. 3 was formed from the transparent polycarbonate plate by the production process shown in the flow chart of Fig. 1. This card base material 10 was cut into 15 write once memory cards 15, each being 54 x 86 mm in size and having an appearance as shown in Fig. 4.

Referring to the flow chart of Fig. 1 a UV curing resin was coated in a first step by a roll coater on one surface (data read-out surface) of the rectangular base plate 1, that is the transparent polycarbonate plate, to a thickness of several microns, to form a hard coat layer 2, for protecting the data read-out surface from scratches or contamination.

In a second step, a UV curing resin is coated by a roll coater on the other surface (data recording surface) of the rectangular base material 1, that is the transparent polycarbonate plate, to form a first protective layer 3.

These first and second steps are pre-processing steps for forming a recording layer 4 on the base material 1 in the next third step.

In the third step, an organic optical recording material as the recording medium for the optically recordable and reproducible data is coated to a thickness of several microns on the first protective layer 3 to form a recording layer 4.

In this third step, Sb₂ Se₃ and Bi₂ Te₃, which are calcogenide base alloys acting as the recording media for optically recordable and reproducible data, may be sequentially formed on the first protective layer 3 by vacuum forming techniques, such as vacuum evaporation or sputtering, to form the recording layer 4.

In the next fourth step, the UV curing resins are coated by a roll coater on the recording layer 4 to a thickness of several microns to form a second protective layer 5.

In these first, second and third steps, a coating material is supplied to transfer contact portions of a first roll 101 and a second roll 102, and the base material 1 is passed while it is sandwiched between the first and the second rolls 102, 103 to apply the coating material to a desired thickness.

By using the UV curing resins, such as acrylic resin, as the coating material, and adjusting its viscosity to several to several hundreds of centipoise, the acrylic resin could be uniformly applied to a thickness of several microns by the above mentioned roll coater, without the resin migrating to the other surface, to form the hard coat layer 2, the first layer 3 and the second layer 5.

By using the polyurethane or rubber UV curing resins as the coating material, the first protective layer 3 and the second protective layer 5 could be formed, which had a lower Young modulus and a lower thermal conductivity as compared with the polycarbonate base plate 1.

As the UV curing resins for forming the protective layers 3, 5 having the lower young modulus and the lower thermal conductivity, a sample i, manufactured by the Dainippon Ink Co. Ltd. under the trade name SD-17, a sample ii manufactured by the Dainippon Ink Co. Ltd. under the trade name SD-301, and a sample iii manufactured of the Three Bond Co. Ltd. under the trade name TB-3080, were employed.

The first protective layer 3 and the second protective layer 5 are formed in the manner of sandwiching the recording layer 4 for thermally protecting the base material 1, assuring the adhesivity with the base material 1 and the protective film 6 as later described, and for protecting the recording layer 4, and may be formed with the use of thermosetting resins, according to the usage and the application.

In a sixth step, a roll-shaped polyester film having a thickness of 0.05 to 0.1 mm, is prepared as a protective film 6. In a fifth step, a thermosetting adhesive 7 is coated by a roll coater on one surface of the protective film 6 to a thickness of 10 to several tens of microns, and the above mentioned protective film 6 is laminated on the second protective layer 5 with the adhesive 7. On the protective film 6, there are previously applied necessary printing data.

In a seventh step, the adhesive 7 is solidified.

In an eighth step, the thus formed card base material 10, having the cross-sectional structure as shown in Fig. 3, is cut into the shape of desired cards, such as by punching or laser trimming. In the present embodiment, the above mentioned card base material is punched and cut by mold shaping into 15 write once memory cards 15, which is 54 x 86 mm in size, as shown in Fig. 4.

With the method of the present embodiment, consisting of the above mentioned first to eighth steps, the coating operation from the first to the fourth step is carried out in this order continuously by a roll coater to form the hard coat layer 2, the first protective layer 3, the recording layer 4 and the second protective layer 5 by roll coating to uniform thicknesses efficiently and optically homogeneously. In addition, the protective film 6 is laminated in the sixth step on the second protective layer 5 to form the card base material 10 which is cut into desired card shape at a time in the eighth step, so that the high quality write once memory cards 15 may be produced highly efficiently.

In the above embodiment, for producing the ROM or read only memory type optical card for reading out pre-recorded data, it suffices to change the third step of forming the recording layer 4 in the manufacture process in the flow chart of Fig. 1 as shown in Fig. 6.

That is, in Fig. 6, in step A, a high reflectivity layer formed of, for example, aluminum, is formed, by a vacuum film forming method, on the first protective layer 3, formed in the above mentioned second step. In the next step B, a resist layer is formed by coating a resist on the high reflectivity layer by a roll coater. In the next step C, desired data are formed on the resist layer by mask exposure. In the next step D, the high reflectivity layer is etched to form the ROM type recording layer 4 on which desired data are written previously.

For producing an optical card of a reduced thickness, a roll-shaped film of, for example, polycarbonate or polyester, having the thickness of 0.1 to 0.4 mm, is used as the rectangular base material 1. The above mentioned first to eighth steps are carried out, while the film base material 1 is taken up as shown in Fig. 7 from the first roll 201 to the second roll 202, to produce the optical card continuously in accordance with the film carrier system. In this case, when forming the recording layer 4 by the vacuum film forming method, such as evaporation or sputtering, the film feeding device for taking up the roll-shaped base material 1 from the first roll 201 onto the second roll 202 may be provided in their entirety in a vacuum chamber.

Meanwhile, desired printing may be performed after the eighth step on the card-by-card basis by a pad printer adapted for transferring the chalcographic printing data with the use of a transparent or plain white tint polyester film having a thickness of 50 to 400 µm.

An embodiment shown in the flow chart of Fig. 8 includes a ninth step of printing the protective film 6 after the eighth step. In this ninth step, necessary data are printed on the surface of the protective film 6 on each optical card 15, formed in the eighth step to a size of 54 x 86 mm, by using a pad printer 20 having the structure shown in Fig. 9.

The pad printer 20 is formed by a chalcographic plate for data necessary for printing, a vistula 23 for applying ink in an ink reservoir 22 onto the chalcographic plate 21, a slider 25 provided with a doctor blade 24 for squeezing the plate 21 for removing the redundant ink on the plate 21, and pads 27 for transfer printing the data necessary for printing from the plate 21 onto the protective film 6 of the printing material, that is, the optical card 15, resting on a sample base 26. The ink pattern of the data is transferred from the plate 21 onto the pad 27 to apply the pad 27 to the protective film to transfer the ink pattern from the pad 27 onto the surface of the protective film 6 for printing.

With the above described pad printer 20, the necessary data may be transfer printed only by movement of the pad 27, if only the printing matter is set in advance, so that adjustment and automation may be facilitated and operability may be improved, while printing may be made with good productivity with a small mounting space. By mounting the pad printer simultaneously, multicolor printing may be performed efficiently.

In the tenth step, the ink pattern formed by transfer printing on the surface of the pad printer 20 is dried and solidified.

With the manufacture method of the present embodiment, consisting of the first to tenth steps, the recording layer 4 and the protective layer 5 are laminated on the rectangular base material 1 and the protective layer 6 is laminated on the protective layer 5 to form the card base material 10, which is then cut into desired card shape. Necessary data are then printed on the protective film 6 by pad printing on the card-by-card basis, so that high positioning accuracy is not necessitated in laminating the protective film 6 and hence the production yield may be improved to reduce the costs. On the other hand, since the necessary data are printed on the card-by-card basis, multiple species small quantity production of the optical cards may be realized efficiently.

Although the recording layer 4 and the protective layer 5 are laminated on the rectangular base material 1, the recording layer and the protective layer may be formed by spin coating method or vacuum film forming techniqe on a circular base material and the protective film may be laminated on the protective layer to form the card base material, which may then be cut into desired card form. Pad printing may then be performed on the protective film of each card to improve the yield of production and to lower the costs to realize efficient multiple species small quantity production of optical cards.

With the manufacture method shown in the flow chart of Fig. 1, a double-layer structure recording layer 4, formed by laminating the Sb₂Se₃ layer and the Bi₂Te₃ layer, each 400 A in thickness, was formed on a polycarbonate base material 1, which was 0.7 mm in thickness, to produce the optical card, in which the samples 1, 2 and 3 were formed on the recording layer 4, and the reproduction output was measured for comparison sake. The results are shown in Table 1.

**Table 1**

| sample | Young Modulus dyn/cm | viscosity cps | reproducing output |
|---|---|---|---|
| sample 1: SD-17 | 2 x 10¹⁰ | 20 | 1 |
| sample 2: SD-30 | 11.8 x 10¹⁰ | 500 | 1.2 |
| sample 3: TB-3080 | 9.8 x 10⁷ | 500 | 1.3 |

By forming the protective layer 5 of the UV curing resin having the Young modulus as low as 2x10¹⁰ dyn/cm and having the lower thermal conductivity than the base material 1, it becomes possible to improve the recording sensitivity and to relieve the stress on the recording layer 4 to realize the optical recording medium of higher reliability.

It is to be noted that the optical recording medium and the production method therefor according to the present invention is not limited to the optical card, as in the above described embodiment, but the optical disk having the disk-shaped outer configuration may be prepared by the present method.

## Claims

1. An optical recording medium having a light transmissive base material (1, 10), a recording layer (4) which is provided on said material and which may be optically read out, and a protective layer (5) provided on said recording layer (4), **characterized in that** said protective layer (5) is formed of a material having a Young modulus of not higher than 2 x 10³ N /mm (2 x 10¹⁰ dyn/cm) and having a lower thermal conductivity than the base material (1, 10) such, that said base material (1, 10) together with said recording layer (4) and said protective layer (5) is capable of being divided or cut into desired shapes.

2. The optical recording medium according to claim 1, **characterized in that** said protective layer (5) is formed of a UV curing resin.

3. The optical recording medium according to claim 1, **characterized in that** said base material (1, 10) is a base plate.

4. The optical recording medium according to claim 1, **characterized in that** said base plate has the form of a card.

5. The optical recording medium according to claim 1, **characterized in that** said base plate has the form of a disc.

6. A method for producing an optical recording medium comprising a first step of forming a recording layer (4) on a base material (1, 10), and a second step of forming a protective layer (5) made of a material having a Young modulus of not more than 2 x 10³ N/mm (2x10¹⁰ dyn/cm), and a lower thermal conductivity than said base material (1,10) by roll coating on the recording layer formed in said first step, and a third step of dividing or cutting the base material on which the recording layer (4) has been formed by said first and second steps, into predetermined shapes.

7. The method for producing an optical recording medium according to claim 6, **characterized in that** said first step comprises a sub-step of forming a high reflectivity layer, a sub-step of forming a resist layer on the high reflectivity layer formed by the last mentioned sub-step, a sub-step of subjecting the resist layer formed by the last mentioned sub-step to mask exposure and a sub-step of etching the high reflectivity layer subjected to mask exposure in the last mentioned sub-step.

8. The method for producing an optical recording medium according to claim 6, **characterized by** a pre-processing step for pre-processing the base material prior to said first step, said pre-processing step comprises the step of forming a hard coating layer (2) on said base material (1, 10) and the step of forming a protective layer (3) by a roll coater on the other surface of the base material (1,10).

9. The method for producing an optical recording medium according to claim 6, **characterized in that** said protective material is formed of a UV curing resin.

10. The method for producing a recording medium according to claim 6, **characterized in that** before said third step, a protective film (6) is provided on the protective layer (5) formed during said second step.

11. The method for producing an optical recording medium according to claim 10, **characterized in that** said protective film (6) is subjected in advance to printing.

12. The method for producing an optical recording medium according to claim 10, **characterized by** the step of printing on said protective film (6) cut by said third step.

13. The method for producing an optical recording medium according to claim 12, **characterized in that** said printing is performed by pad printing.

## Patentansprüche

1. Optisches Aufzeichnungsmedium mit einem lichtdurchlässigen Grundmaterial (1, 10), einer Aufzeichnungsschicht (4), welche auf dem Material vorgesehen ist und optisch ausgelesen werden kann, und eine auf der Aufzeichnungschicht (4) vorgesehene Schutzschicht (5), **dadurch gekennzeichnet,** daß die Schutzschicht (5) aus einem Material mit einem Young-Modul von nicht höher als 2 x 10³ N/mm (2 x 10¹⁰ dyn/cm) gebildet ist und eine geringere thermische Leitfähigkeit als das Grundmaterial (1, 10) aufweist, so daß das Grundmaterial (1, 10) zusammen mit der Aufzeichnungsschicht (4) und der Schutzschicht (5) unterteilt oder in gewünschte Formen geschnitten werden kann.

2. Optisches Aufzeichnungsmedium nach Anspruch 1, **dadurch gekennzeichnet,** daß die Schutzschicht (5) aus einem UV-härtenden Harz gebildet ist.

3. Optisches Aufzeichnungsmedium nach Anspruch 1, **dadurch gekennzeichnet,** daß das Grundmaterial (1, 10) eine Grundplatte ist.

4. Optisches Aufzeichnungsmedium nach Anspruch 1, **dadurch gekennzeichnet,** daß die Grundplatte die Form einer Karte aufweist.

5. Optisches Aufzeichnungsmedium nach Anspruch 1, **dadurch gekennzeichnet**, daß die Grundplatte die Form einer Scheibe hat.

6. Verfahren zur Herstellung eines optischen Aufzeichnungsmediums, umfassend einen ersten Schritt des Ausbildens einer Aufzeichnungsschicht (4) auf einem Grundmaterial (1, 10) und einen zweiten Schritt des Ausbildens einer Schutzschicht (5), die aus einem Material mit einem Young-Modul von nicht mehr als 2 x 10³ N/mm (2 x 10¹⁰ dyn/cm) gebildet ist und eine geringere thermische Leitfähigkeit als das Grundmaterial (1, 10) aufweist, durch Walzenbeschichtung auf der im ersten Schritt gebildeten Aufzeichnungsschicht, und einen dritten Schritt des Unterteilens oder Schneidens des Grundmaterials, auf welchem die Aufzeichnungschicht (4) durch den ersten und zweiten Schritt gebildet worden ist, in vorbestimmte Formen.

7. Verfahren zur Herstellung eines optischen Aufzeichnungsmediums nach Anspruch 6, **dadurch gekennzeichnet,** daß der erste Schrilt einen Unterschritt des Ausbildens einer Schicht mit hohem Reflexionsvermögen, einen Unterschritt des Ausbildens einer Resistschicht auf der durch den zuletzt genannten Unterschritt ausgebildeten Schicht mit hohem Reflexionsvermögen, einen Unterschritt des Unterziehens der durch den zuletzt genannten Unterschritt ausgebildeten Resistschicht einer Maskenbelichtung sowie einen Unterschritt des Ätzens der der Maskenbelichtung in dem zuletzt genannten Unterschritt unterzogenen Schicht mit hohem Reflexionsvermögen umfaßt.

8. Verfahren zur Herstellung eines optischen Aufzeichnungsmediums nach Anspruch 6, **gekennzeichnet durch** einen Vorbearbeitungsschritt zur Vorbearbeitung des Grundmaterials vor dem ersten Schritt, wobei der Vorbearbeitungsschritt den Schritt des Ausbildens einer harten Überzugsschicht (2) auf dem Grundmaterial (1, 10) und den Schritt des Ausbildens einer Schutzschicht (3) durch einen Walzenbeschichter auf der anderen Oberfläche des Grundmaterials (1, 10) umfaßt.

9. Verfahren zur Herstellung eines optischen Aufzeichnungsmediums nach Anspruch 6, **dadurch gekennzeichnet**, daß das Schutzmaterial aus einem UV-härtenden Harz gebildet ist.

10. Verfahren zur Herstellung eines Aufzeichnungsmediums nach Anspruch 6, **dadurch gekennzeichnet**, daß vor dem dritten Schritt ein Schutzfilm (6) auf der während des zweiten Schritts gebildeten Schutzschicht (5) vorgesehen wird.

11. Verfahren zur Herstellung eines optischen Aufzeichnungsmediums nach Anspruch 10, **dadurch gekennzeichnet,** daß der Schutzfilm (6) vorausgehend einem Bedrucken unterzogen wird.

12. Verfahren zur Herstellung eines optischen Aufzeichnungsmediums nach Anspruch 10, **gekennzeichnet durch** den Schritt des Bedruckens des Schutzfilms (6), welcher durch den dritten Schritt geschnitten worden ist.

13. Verfahren zur Herstellung eines optischen Aufzeichnungsmediums nach Anspruch 12, **dadurch gekennzeichnet**, daß das Bedrucken mittels Farbkissen-Drucken durchgeführt wird.

## Revendications

1. Support d'enregistrement optique comportant un matériau de base laissant passer la lumière (1, 10), une couche d'enregistrement (4) qui est prévue sur ledit matériau et qui peut être lue optiquement et une couche de protection (5) prévue sur ladite couche d'enregistrement (4), caractérisé en ce que ladite couche de protection (5) est formée en un matériau présentant un module d'Young non supérieur à 2 ×10³ N/mm (2 × 10¹⁰ dynes/cm) et présentant une conductivité thermique inférieure à celle du matériau de base (1, 10) de telle sorte que ledit matériau de base (1, 10) en association avec ladite couche d'enregistrement (4) et avec ladite couche de protection (5) puisse être divisé ou découpé selon des formes souhaitées.

2. Support d'enregistrement optique selon la revendication 1, caractérisé en ce que ladite couche de protection (5) est formée en une résine durcissable aux ultraviolets.

3. Support d'enregistrement optique selon la revendication 1, caractérisé en ce que ledit matériau de base (1, 10) est une plaque de base.

4. Support d'enregistrement optique selon la revendication 1, caractérisé en ce que ladite plaque de base a la forme d'une carte.

5. Support d'enregistrement optique selon la revendication 1, caractérisé en ce que ladite plaque de base a la forme d'un disque.

6. Procédé de fabrication d'un support d'enregistrement optique comprenant une première étape de formation d'une couche d'enregistrement (4) sur un matériau de base (1, 10) et une seconde étape de formation d'une couche de protection (5) réalisée en un matériau présentant un module d'Young non supérieur à 2 × 10³ N/mm (2 × 10¹⁰ dynes/cm) et une conductivité thermique inférieure à celle dudit matériau de base (1, 10) au moyen d'un revêtement par rouleau sur la couche d'enregistrement formée lors de ladite première étape, et une troisième étape de division ou de découpe du matériau de base sur lequel la couche d'enregistrement (4) a été formée par lesdites première et seconde étapes, selon des formes prédéterminées.

7. Procédé de fabrication d'un support d'enregistrement optique selon la revendication 6, caractérisé en ce que ladite première étape comprend une sous-étape de formation d'une couche haute réflectivité, une sous-étape de formation d'une couche de réserve sur la couche haute réflectivité formée par la sous-étape mentionnée en dernier, une sous-étape de soumission de la couche de réserve formée par la sous-étape mentionnée en dernier à une exposition avec masque et une sous-étape de gravure de la couche haute réflectivité soumise à une exposition avec masque lors de la sous-étape mentionnée en dernier.

8. Procédé de fabrication d'un support d'enregistrement optique selon la revendication 6, caractérisé par une étape de pré-traitement pour pré-traiter le matériau de base avant ladite première étape, ladite étape de pré-traitement comprenant l'étape de formation d'une couche de revêtement dure (2) sur ledit matériau de base (1, 10) et l'étape de formation d'une couche de protection (3) au moyen d'un dispositif de revêtement à rouleau sur l'autre surface du matériau de base (1, 10).

9. Procédé de fabrication d'un support d'enregistrement optique selon la revendication 6, caractérisé en ce que ledit matériau de protection est formé en une résine durcissable aux ultraviolets.

10. Procédé de fabrication d'un support d'enregistrement optique selon la revendication 6, caractérisé en ce qu'avant ladite troisième étape, un film de protection (6) est prévu sur la couche de protection (5) formée pendant ladite seconde étape.

11. Procédé de fabrication d'un support d'enregistrement optique selon la revendication 10, caractérisé en ce que ledit film de protection (6) est soumis à l'avance à une impression.

12. Procédé de fabrication d'un support d'enregistrement optique selon la revendication 10, caractérisé par l'étape d'impression sur ledit film de protection (6) découpé au moyen de ladite troisième étape.

13. Procédé de fabrication d'un support d'enregistrement optique selon la revendication 12, caractérisé en ce que ladite impression est réalisée au moyen d'une impression par tampon.
